# EUROPÄISCHE PATENTSCHRIFT

(11) **EP 3 131 016 B1**
(45) Veröffentlichungstag und Bekanntmachung des Hinweises auf die Patenterteilung: **02.09.2020**
(21) Anmeldenummer: 16181483.5
(22) Anmeldetag: 27.07.2016
(51) Int. Cl.: G06F 12/06, H04L 12/40, H04L 12/403, H04L 29/12, G06F 13/364, G06F 13/40, G06F 13/42

(54) **DYNAMIKADRESSIERUNG**
DYNAMIC ADDRESSING
ADRESSAGE DYNAMIQUE

(30) Priorität: 14.08.2015 DE 102015113491
(43) Veröffentlichungstag der Anmeldung: 15.02.2017
(73) Patentinhaber: ebm-papst Mulfingen GmbH & Co. KG, 74673 Mulfingen (DE)
(72) Erfinder: TEUKE, Klaus, 74677 Dörzbach (DE)
(74) Vertreter: Staeger & Sperling Partnerschaftsgesellschaft mbB

(56) Entgegenhaltungen:
- WO-A1-2009/040298
- US-A1- 2012 072 626
- US-B1- 8 631 179

## Beschreibung

### Gebiet der Erfindung

Die Erfindung betrifft ein dynamisch adressierbares Master-Slave-System und ein Verfahren zum dynamischen Adressieren von Slave-Einheiten.

### Hintergrund der Erfindung

Bussysteme verschiedenster Art sind seit langem bekannt. Die der vorliegenden Erfindung zugrunde liegenden Master/Slave Bussysteme besitzen meist die Eigenschaft, dass alle Slaves eindeutige Adressen haben müssen, um individuell angesprochen werden zu können. Mittels Bussystem können dadurch einzelne Slaves individuell angesprochen werden, wobei darüber die Einstellungen der Slaves geändert werden können oder Zustandsinformationen vom Slave abgefragt werden können. Bussysteme verschiedenster Art wie z. B. Master-Slave-Bussysteme sind im Stand der Technik seit Langem bekannt.

Bei vielen Master-Slave-Bussystemen sind die Slave-Einheiten des Systems durch die Master-Einheit individuell identifizierbar und ansprechbar. Dadurch ist eine Master-Einheit beispielsweise in der Lage, bei einer bestimmte Slave-Einheit eine von dieser Slave-Einheit angesteuerte Systemkomponente zu betätigen, oder empfangene Meldungen einer bestimmten Slave-Einheit- und damit einer bestimmten Systemkomponente zuzuordnen. Um eine solche Funktionalität zu gewährleisten, benötigt die Slave-Einheit zum Einen eine systemweit eindeutige Adresse; zum Anderen muss die eindeutige Adresse sowie die Zugehörigkeit der Slave-Einheit zu einer Systemkomponente oder ihre Position im Bus-system der Master-Einheit bekannt sein.

Konventionell wird dies beispielsweise erreicht, indem bei der Initialisierung eines Bussystems eine Adressier- oder Orientierungsphase durchgeführt wird. In dieser Phase werden den Slave-Einheiten zum Beispiel in einer bestimmten Reihenfolge Systemadressen zugeteilt, oder der Master-Einheit wird Gelegenheit gegeben, nacheinander gespeicherte Gerätekennungen von einzelnen Slave-Einheiten an verschiedenen Positionen abzufragen. Beispielsweise wird eine Adressvergabe an die Slave-Einheiten manuell durchgeführt, indem die vorhandenen Slaves in einer definierten Reihenfolge nacheinander einzeln an das Bussystem angeschlossen oder mittels eines manuell betätigten Schalters nacheinander einzeln zur Adressierung freigegeben werden: Weil nur eine definierte, manuell ausgewählte Slave-Einheit an die Busleitung angeschlossen bzw. zur Adressierung freigegeben ist, kann die Master-Einheit durch das Ausgeben eines - eigentlich an alle am Bussystem hängenden Slave-Einheiten gerichteten - Broadcast-Befehls auf dem Bus eine eindeutige Adresse an diese einzelne Slave-Einheit vergeben. Auf Grund der definierten Reihenfolge, in der die Slave-Einheiten adressiert werden, kennt die Master-Einheit nach der Adressvergabe auch die relative Position der einzelnen Slave-Einheiten im System. Solche manuellen Verfahren sind jedoch zeitaufwändig und durch Einbindung einer Person fehleranfällig.

Einen automatisierten Adressiervorgang schlägt die DE 103 36 301 A1 vor. Aus der EP 2 287 689 EP ist ein Bus-basierendes Adressierverfahren von Slave-Einheiten bekannt. Die im Stand der Technik bekannten Lösungen benötigen zur Umsetzung des Adressierverfahrens und zur Umsetzung der Busarchitektur entsprechende Systemkomponenten die zusätzliche Kosten verursachen und auch Bauraum benötigen. Auch beim Austausch von einer mit einem Slave verbundenen Anlagenkomponente, wie zum Beispiel einem Lüfter, sind entsprechende Maßnahmen notwendig die Adressvergabe anschließend zu konfigurieren.

In der DE 10 2014 117 797.5 A1 wird daher ein Master-Slave-System vorgeschlagen, umfassend eine Master-Einheit mit einem Digitalausgang zur Bereitstellung eines Signals oder eine serielle Signalfolge von Signalen und mehrere Slave-Einheiten, wobei die Slave-Einheiten jeweils einen digitalen seriellen Speicher mit einer Größe von einem Bit aufweisen und jeweils einen Eingang und einen Ausgang aufweisen, wobei die Slave-Einheiten über die Eingänge und die Ausgänge über eine Signalleitung seriell miteinander verbunden sind und wobei der Eingang einer ersten Slave-Einheit über die Signalleitung mit dem Digitalausgang der Master-Einheit verbunden ist. Das Master-Slave-System ist so konfiguriert, dass am Eingang der Slave-Einheit ein vom Digitalausgang bereitgestelltes Signal (Signalwechsel) einer seriellen Signalfolge detektiert wird, um die Adresse der entsprechenden Slave-Einheit jeweils um den Wert "1" zu erhöhen, den Signalwechsel im Speicher zu hinterlegen und ein zum Inhalt des Speichers korrespondierendes Signal am Ausgang des Speichers auszugeben.

Nachteilig bei diesem Adressierungsverfahren ist, dass zur Adressierung über Schieberregister ein Taktsignal vom Master erforderlich ist und die Adressierung nicht quasi-automatisch nach dem Systemstart abläuft.

Aus der US 8 856 413 B2 ist eine dynamisch adressierbare Slave-Einheit, umfassend ein Interface-Bus, eine Freigabeschaltung mit einem Schalter und zwei Steueranschlüssen bekannt, die über die Freigabeschaltung verbunden sind. Das System ist so konfiguriert, dass die Adresszuordnung nur dann möglich ist, wenn das Bus-Interface-Steuersignal an einem der Anschlüsse anliegt und sofern zur Steuerung der Freisetzung der Signalschalter offen ist. Andernfalls sperrt die Freigabeschaltung die Slave-Einheit. Nachteilig ist bei diesem Verfahren, dass eine spezielle Schaltung erforderlich ist, um die Adressierung vorzunehmen.

Es besteht im Übrigen ein Bedürfnis danach, die Adressierung in einer aufsteigenden Adressreihenfolge vorzunehmen, sowie Fehler durch Störungen bei der Adressübergabe automatisch (d. h. ohne manuellen Eingriff) zu eliminieren.

Vor diesem Hintergrund ist es Aufgabe der vorliegenden Erfindung, vorbesagte Nachteile zu überwinden und ein verbessertes Verfahren zum dynamischen Adressieren von Slave-Einheiten sowie dynamisch adressierbares Master-Slave-System bereitzustellen, welches auf eine Bus-Architektur für die Adressvergabe verzichten kann und einfach in der Implementierung und Handhabung ist und nach dem Start des Systems quasi-automatisch abläuft.

Diese Aufgabe wird gelöst mit einem dynamisch adressierbaren Master-Slave-System mit den Merkmalen von Anspruch 1 sowie einem Verfahren zum dynamischen Adressieren von Slave-Einheiten mit den Merkmalen von Anspruch 10. Grundgedanke der vorliegenden Erfindung ist es, das Master-Slave-System so zu konfigurieren, dass zum Zeitpunkt der Einleitung der Adressierung der Slave-Einheiten der Master zunächst eine identische Startwert-Adresse über einen Broadcast-Befehl an alle Slaves übergibt. Dadurch aktiviert der Master die Adressierung über den Broadcast-Befehl bei allen Slaves.

Die Slaves sind über eine Adressierleitung seriell miteinander verbunden. Über die Adressierleitung können Signale übertragen werden, die eine Information über die Adresse enthalten. Die Slaves sind hierzu mit einem Adresseingang zum Empfang der Adresse vom vorhergehenden Slave und einem Adressausgang zur Weiterleitung seiner Adresse an den nächsten Slave verbunden.

Sobald ein Slave ein eindeutiges Signal an seinem Eingang erkannt hat, ermittelt er aus dem Signal die Adresse des vorhergehenden Slaves und setzt seine eigene Adresse auf den um "1" erhöhten Wert. Diese eigene Adresse wird an den Ausgang dieser Slave-Einheit und damit an den Eingang der nächsten Slave-Einheit gegeben.

Erfindungsgemäß ist ferner vorgesehen, dass der erste Slave in der seriellen Kette von Slaves seine Adresse vom Master über einen Broadcast - Befehl zugewiesen bekommt und an seinem Adresseingang kein Signal empfangen wird. Somit ändert er seine Adresse im weiteren Verlauf nicht mehr.

Alternativ kann der Master mit dem Adressiereingang des ersten Slaves verbunden werden und diesem seine Adresse über diese Verbindung zuweisen.

Ab diesem Zeitpunkt wird an den Ausgängen der Slaves die jeweils neue Adresse ausgegeben. Die nachfolgenden Slaves reagieren auf die geänderte Vorgabe und ändern jeweils erneut ihre Adresse. Der dynamische Adressiervorgang wird solange fortgesetzt, bis das System in einen stabilen Adress-Zustand aller Slave-Einheiten gebracht wurde. In diesem Zustand haben alle Slaves eine unterschiedliche Adresse und können alsdann über die Bus-Leitung individuell angesprochen werden.

Gemäß der vorliegenden Erfindung werden die Adressen in aufsteigender Reihenfolge vergeben. Der stabile Adress-Zustand kann z. B. dadurch festgestellt werden, indem eine Adressierleitung des letzten Slaves in der Reihe der seriell verschalteten Slaves an den Master zurückgeführt wird und erfindungsgemäß z. B. eine definierte Zeitspanne ohne Adressänderung den stabilen Zustand repräsentiert.

Nachdem der stabile System-Zustand erreicht ist, deaktiviert der Master die Adressierung wieder über einen Befehl an alle Slaves über die Busleitung.

Erfindungsgemäß wird daher ein dynamisch adressierbares Master-Slave-System umfassend eine Master-Einheit und Anzahl an n Slave-Einheiten vorgeschlagen, wobei die Slave-Einheiten (Slaves) mit der Master-Einheit über ein Bus-System miteinander verbunden sind und von der Master-Einheit über die Busleitung des Bus-Systems zu Beginn der Adressierung wenigstens einen Broadcast-Befehl empfangen können. Die Slave-Einheiten weisen jeweils einen Adresseingang und einen Adressausgang auf und sind über eine von der Busleitung getrennte d. h. separate Adressleitung seriell miteinander verbunden, wobei das Master-Slave-System so konfiguriert ist, dass die Master-Einheit einerseits zur Aktivierung und andererseits zur Durchführung des dynamischen Adressiervorgangs von Slave-Adressen Broadcast-Befehle gleichzeitig an die Slave-Einheiten senden kann.

In einer bevorzugten Ausführungsform der Erfindung ist daher vorgesehen, dass zur Aktivierung des dynamischen Adressiervorgangs ein erster Broadcast-Befehls an alle Slave-Einheiten erfolgt, indem diesen, insbesondere der ersten Slave-Einheit, eine identische Startwert-Adresse über die Busleitung zugewiesen wird. In diesem Zustand besitzen alle Slaves die gleiche Startadresse. Bevorzugt stellen die Slaves z. B. Ventilatoren dar, die über eine Busleitung miteinander verbunden sind.

Mit Vorteil ist weiter vorgesehen, dass der Adressausgang der n-1 Slave-Einheiten mit dem Adresseingang der jeweils seriell benachbarten nächsten Slave-Einheit verbunden ist.

Nach der Aktivierung erfolgt in einer bevorzugten Ausgestaltung die Durchführung des dynamischen Adressiervorgangs mittels des ersten oder mittels eines weiteren Broadcast-Befehls an alle Slave-Einheiten, wobei die Adressvergabe der 2-ten bis n-ten Slave-Einheiten nicht mehr über die Busleitung, sondern über die Adressleitung erfolgt, während die erste Slave-Einheit ihre Adresse allerdings nicht mehr ändert.

In vorteilhafter Weise ist daher die erste Slave-Einheit eingangsseitig nicht mit der Adressleitung verbunden und erhält diese Slave-Einheit ihre Adresse über den Broadcast-Befehl über die Busleitung. In einer alternativen Ausgestaltung kann die erste Slave-Einheit Ihre Adresse über eine Adressleitung vom Master beziehen.

Die Slave-Adresse der i-ten Slave-Einheit erhöht den am Eingang detektierten Adresswert jeweils um den Wert "1", sobald ein Signal über die Adressleitung am Adresseingang von der benachbarten (i-1)-ten Slave-Einheit empfangen wird. Dieser Adresswert wird dann am Ausgang der betroffenen Slave-Einheit weitergegeben.

Mit Vorteil ist daher vorgesehen, dass nach dem Erhöhen der Slave-Adresse der i-ten Slave-Einheit ein Signal am Adressausgang zur benachbarten (i+1)-ten Slave-Einheit und zwar zu dessen Adresseingang geführt wird und der dynamische Adressiervorgang so lange wiederholt wird, bis an der n-ten Slave-Einheit n-1 Adressänderungen ausgehend von dem Startwert vollzogen wurden (sofern kein Fehlersignal vorlag).

In einer weiter bevorzugten Ausgestaltung der Erfindung ist vorgesehen, dass der Ausgang der letzten Slave-Einheit in der seriellen Anordnung mit der Master-Einheit über eine Rückleitung verbunden ist, um dadurch das Ende der dynamischen Adressierung anzuzeigen, sobald ein stabiler Adress-Zustand erreicht ist.

Ein weiterer Aspekt der vorliegenden Erfindung betrifft das Verfahren zum dynamischen Adressieren von n Slave-Einheiten eines wie zuvor beschriebenen Master-Slave-Systems mit den folgenden Schritten:
- die Aktivierung des dynamischen Adressiervorgangs wird mittels eines Broadcast-Befehls an alle Slave-Einheiten durchgeführt;
- allen Slave-Einheiten, insbesondere der ersten Slave-Einheit, wird über eine Busleitung eine identische Startwert-Adresse zugewiesen;
- Durchführen des Adressiervorgangs durch Erhöhen des gerade aktuellen Adresswertes der jeweiligen Slave-Adresse (Aᵢ) der i-ten Slave-Einheit um den Wert "1" gegenüber dem Eingangsadresswert sobald ein Signal am Adresseingang der benachbarten (i-1)-ten Slave-Einheit (2) erhalten wird;
- nach dem Erhöhen der Slave-Adresse der i-ten Slave-Einheit wird jeweils ein Signal am Adressausgang zur benachbarten (i+1)-ten Slave-Einheit zu dessen Adresseingang geführt und der dynamische Adressiervorgang so lange wiederholt, bis an der n-ten Slave-Einheit n-1 Adressänderungen ausgehend von dem Startwert vollzogen wurden. Besonders vorteilhaft ist die Durchführung des Verfahrens, wenn die Signalweitergabe beim Adressierprozess über die Adressleitung von der einen zur nächsten Slave-Einheit mittels Analogsignalen, bitcodierten digitalen Signalen, Signalpulsfolgen oder mittels optischer Signale erfolgt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

### Es zeigen:

- Fig. 1: eine schematische Darstellung eines beispielhaften Ausführungsbeispiels eines Master-Slave-Systems;
- Fig. 2: eine schematische Darstellung der Adressvergabe bei vier Slave-Einheiten und
- Fig. 3: eine schematische Darstellung der Adressvergabe ähnlich der Figur 2 jedoch mit einem Störsignal.

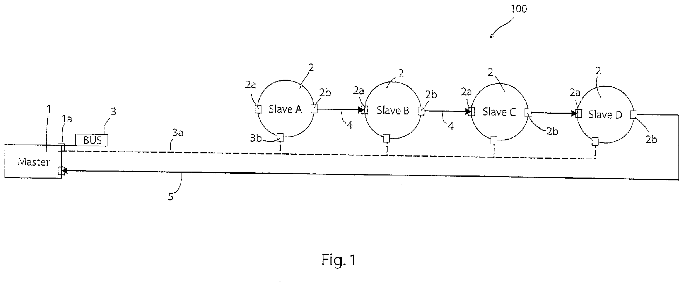

Im Folgenden wird die Erfindung anhand eines Ausführungsbeispiels mit Bezug auf die Figuren 1 bis 3 näher beschrieben, wobei gleiche Bezugszeichen auf gleiche funktionale und/oder strukturelle Merkmale hinweisen.

In der Figur 1 ist eine schematische Darstellung eines beispielhaften Ausführungsbeispiels eines Master-Slave-Systems 100 gezeigt. Das Master-Slave-System 100 umfasst eine Master-Einheit 1 und vier beispielhafte Ventilatoren Slave A, Slave B, Slave C und Slave D. Grundsätzlich kann jede geeignete Anzahl an Slave-Einheiten 2 vorgesehen werden, wobei die Slave-Einheiten 2 mit der Master-Einheit 1 über ein Bus-System 3 miteinander verbunden sind und über die Bus-Leitung 3a des Bus-Systems 3 kommunizieren können, sobald eine eindeutige Adresse vorhanden ist.

Jede Slave-Einheit 2 weist hierzu eine Bus-Schnittstelle 3b auf, die mit der Bus-Schnittstelle 1a der Master-Einheit 1 verbunden sind.

Ferner weist jede Slave-Einheit 2 einen Adresseingang 2a und einen Adressausgang 2b auf. Die Slave-Einheiten 2 sind über den Adressausgang bzw. den Adresseingang der jeweils benachbarten Slave-Einheit 2 über eine Adressdatenleitung 4 (kurz Adressleitung 4) seriell miteinander verbunden.

Wie in der Figur 1 zu erkennen ist, ist die Adressleitung 4 eine von der Busleitung 3a getrennte Leitung. Die erste Slave-Einheit 2 (Slave A) ist allerdings nicht über die Adressleitung 4 mit der Master-Einheit 1 verbunden, sondern nur über die Busleitung 3a.

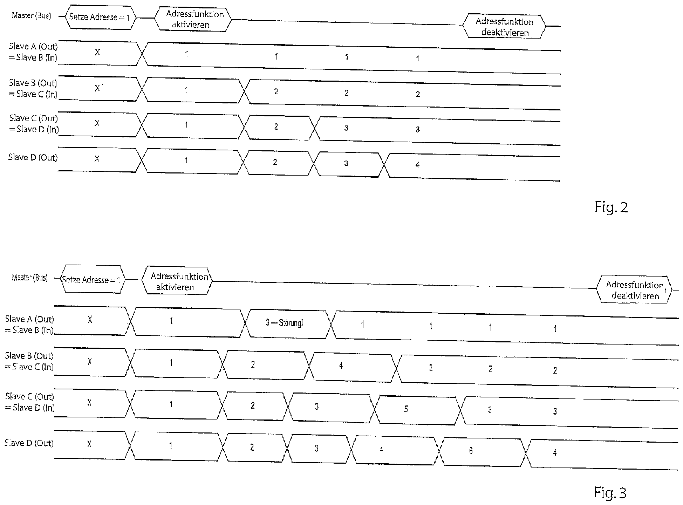

Das Master-Slave-System 100 ist dabei so konfiguriert, dass die Master-Einheit 1 einerseits zur Aktivierung und andererseits zur Durchführung des dynamischen Adressiervorgangs von Slave-Adressen A₁,..., Aᵢ,..., Aₙ Broadcast-Befehle an die Slave-Einheiten 2 senden kann. Wie in der Figur 2 ersichtlich, erfolgt zunächst ein Broadcast Befehl "Setze Adresse = 1" an alle Slave-Einheiten 2. Vorher kann die Adresse der Slave-Einheiten 2 einen beliebigen Wert annehmen, was in den Figuren 2 und 3 mit einem "X" gekennzeichnet wurde.

In einem weiteren Broadcast Befehl "Adressfunktion aktivieren" erfolgt die Aktivierung zur Durchführung der Adressvergabe, die danach quasi-automatisch abläuft.

Bei den vier dargestellten Slave-Einheiten 2, haben nach dem Broadcast Befehl "Setze Adresse = 1" alle vier Slave-Einheiten 2 den Adresswert "1". Nachdem allerdings am Eingang der zweiten Slave-Einheit 2 (Slave B) ein Adresssignal mit dem Adresswert "1" detektiert wird, erhöht sich automatisch die Adresse um den Wert "+1", so dass die zweite Slave-Einheit 2 danach den Adresswert "2" aufweist.

Gleichermaßen pflanzt sich dieser dynamische Prozess bis zur letzten Slave-Einheit fort. Wie in der Figur 2 ersichtlich ist, hat diese dann den Wert 4. Im Normalfall (ohne Störsignale) ändert die Slave-Einheit an der n-ten Position damit n-Mal ihren Adresswert (einschließlich der Startadressierung).

In der Figur 3 ist ein Beispiel gezeigt, wie am Ausgang von Slave A und am Eingang von Slave B ein Störsignal mit dem Adresswert "3" anliegt. Allerdings wird diese Störeinfluss beim dynamischen Adressieren gemäß der vorliegenden Erfindung wieder automatisch bereinigt. Das Störsignal wird an alle Slave-Einheiten 2 zeitlich verzögert weitergegeben. Die Störung liegt demzufolge an jedem Slave nur solange an, wie die Länge des eingekoppelten Störsignals ist. Danach ist der Einfluss der Störung wieder eliminiert.

Die letzte Slave-Einheit 2 hat an ihrem Ausgang 2b eine Verbindung über eine Adressleitung 5 zur Master-Einheit 1, um den Abschluss der Adressierung zu detektieren. Sobald ein stabiler Adress-Zustand besteht versendet die Master-Einheit 1 über die Busleitung 3a des Bus-Systems 3 einen weiteren Broadcast Befehl "Adressfunktion deaktivieren". Danach besitzen die Slave-Einheiten 2 eine feste ansprechbare Adresse, die über das Bus-System angesprochen werden kann.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Alle offenbarten Merkmale sind in beliebigen Kombinationen verwendbar soweit dies technisch möglich ist.

## Patentansprüche

1. Verfahren zum dynamischen Adressieren von n Slave-Einheiten (2) eines Master-Slave-Systems (100) umfassend eine Master-Einheit (1) und eine Mehrzahl von Slave-Einheiten (2), wobei die Slave-Einheiten (2) mit der Master-Einheit (1) über ein Bus-System (3) miteinander verbunden sind und von der Master-Einheit (1) über die Busleitung (3a) des Bus-Systems (3) wenigstens einen Broadcast-Befehl (B) empfangen können, wobei das Master-Slave-System (100) so konfiguriert ist, dass die Master-Einheit (2) einerseits zur Aktivierung und andererseits zur Durchführung des dynamischen Adressiervorgangs von Slave-Adressen (A₁,..., Aᵢ,..., Aₙ) entsprechende Broadcast-Befehle (B) an die Slave-Einheiten (2) senden kann und wobei die Slave-Einheiten (2) jeweils einen Adresseingang (2a) und einen Adressausgang (2b) aufweisen und über eine von der Busleitung (3a) getrennte Adressleitung (4) seriell miteinander verbunden sind.
mit den folgenden Schritten:
a. die Aktivierung des dynamischen Adressiervorgangs wird mittels eines Broadcast-Befehls (B) an alle Slave-Einheiten (2) durchgeführt;
b. allen Slave-Einheiten (2) wird über eine Busleitung (3a) eine identische Startwert-Adresse (SA) zugewiesen;
c. Durchführen des Adressiervorgangs durch Erhöhen des eingangsseitigen Adresswertes der jeweiligen Slave-Adresse (Aᵢ) der i-ten Slave-Einheit (2) um den Wert "1" sobald diese ein Signal am Adresseingang (2a) von der benachbarten (i-1)-ten Slave-Einheit (2) erhält und seinen aktuellen Adresswert dadurch anpasst, dass der Adresswert am Adresseingang (2a) jeweils um den Wert "1" erhöht wird
d. nach dem Erhöhen der Slave-Adresse (Aᵢ) der i-ten Slave-Einheit (2) wird jeweils ein Signal am Adressausgang (2b) zur benachbarten (i+1)-ten Slave-Einheit (2) zu dessen Adresseingang (2a) geführt und der dynamische Adressiervorgang so lange wiederholt, bis an der n-ten Slave-Einheit (2) die letzte Adressänderung vollzogen wurden, wobei die Slave-Einheit (2) an der n-ten Position n-Mal ihren Adresswert einschließlich der Startadressierung ändert.

2. Verfahren nach Anspruch 2, **dadurch gekennzeichnet, dass** die n-te (letzte) Slave-Einheit (2) nach ihrer n-ten Adressierung an ihrem Ausgang (2b) über eine Rückleitung (5) ein Signal an die Master-Einheit (1) übermittelt, wodurch die Master-Einheit (1) den Abschluss des Adressierverfahrens detektiert.

3. Verfahren nach Anspruch 2 oder 3, **dadurch gekennzeichnet, dass** die Signalweitergabe beim Adressierprozess über die Adressleitung (4) von der einen zur nächsten Slave-Einheit (2) mittels Analogsignalen, bitcodierten digitalen Signalen, Signalpulsfolgen oder mittels optischer Signale.

4. Verfahren nach einem der vorhergehenden Ansprüche, **dadurch gekennzeichnet, dass** die Aktivierung des dynamischen Adressiervorgangs mittels eines ersten Broadcast-Befehls (B) an alle Slave-Einheiten (2) erfolgt, indem diesen eine identische Startwert-Adresse (SA) über die Busleitung (3a) zugewiesen wird.

5. Verfahren nach einem der vorhergehenden Ansprüche, **dadurch gekennzeichnet, dass** n-Slave-Einheiten (2) vorgesehen sind, wobei der Adressausgang (2b) der n-1 Slave-Einheiten (2) mit dem Adresseingang der jeweils seriell benachbarten nächsten Slave-Einheit (2) verbunden ist.

6. Verfahren nach einem der vorhergehenden Ansprüche, **dadurch gekennzeichnet, dass** nach der Aktivierung die Durchführung des dynamischen Adressiervorgangs mittels des ersten oder eines weiteren Broadcast-Befehls (B) an alle Slave-Einheiten (2) erfolgt, wobei die Adressvergabe der 2-ten bis n-ten Slave-Einheiten (2) über die Adressleitung (4) erfolgt.

7. Verfahren nach einem der vorhergehenden Ansprüche, dass nach dem Erhöhen der Slave-Adresse (Aᵢ) der i-ten Slave-Einheit (2) ein Signal am Adressausgang (2b) zur benachbarten (i+1)-ten Slave-Einheit (2) zu dessen Adresseingang (2a) geführt wird und der dynamische Adressiervorgang so lange wiederholt wird, bis an der n-ten Slave-Einheit (2) n-1 Adressänderungen ausgehend von dem Startwert (SA) vollzogen wurden.

8. Verfahren nach einem der vorhergehenden Ansprüche, **dadurch gekennzeichnet, dass** die erste Slave-Einheit (2) nicht mit der Adressleitung (4) verbunden ist und seine Adresse über den Broadcast-Befehl (B) über die Busleitung (3a) erhält.

9. Verfahren nach einem der vorhergehenden Ansprüche, **dadurch gekennzeichnet, dass** die erste Slave-Einheit (2) über eine Adressleitung (4) mit der Master-Einheit (1) verbunden ist, um seine Adresse über die Adressleitung (4) von der Master-Einheit (2) zu beziehen.

10. Verfahren nach einem der vorhergehenden Ansprüche, **dadurch gekennzeichnet, dass** der Ausgang der letzten Slave-Einheit (2) in der seriellen Anordnung mit der Master-Einheit (1) über eine Rückleitung (5) verbunden ist.

## Claims

1. A method for dynamic addressing of n slave units (2) of a master-slave systems (100) including a master unit (1) and a number of n slave units (2), wherein the slave units (2) are connected to the master unit (1) via a bus system (3) and can receive at least one broadcast command (B) from the master unit (1) via the bus line (3a) of the bus system (3), wherein the master-slave system (100) is configured such that the master unit (1) can send respective broadcast commands (B) to the slave units (2), on the one hand, for activation, and on the other hand, for performing the dynamic addressing process of slave addresses (A₁,..., Aᵢ,..., Aₙ), and wherein the slave units (2) each comprise an address input (2a) and an address output (2b) and are serially connected via an address line (4) separate from the bus line (3a),
comprising the following steps:
a. Activation of the dynamic addressing process is performed using a broadcast command (B) to all slave units (2);
b. An identical start address (SA) is assigned to all slave units (2) via a bus line (3a);
c. Performing the addressing process by increasing the input-side address value of the respective slave address (Aᵢ) of the ith slave unit (2) by the value "1" as soon as it receives a signal at the address input (2a) from the adjacent (i-1)th slave unit (2) and adjusts its current address value in that the address value at the address input (2a) is increased by the value "1", respectively;
d. After increasing the slave address (Aᵢ) of the ith slave unit (2), a signal at the address output (2b) is conducted to the address input (2a) of the adjacent (i+1)th slave unit (2), and the dynamic addressing process is repeated until the last address change was performed at the nth slave unit (2), wherein the slave unit (2) at the nth position changes its address value including its start addressing n times.

2. The method according to claim 2, **characterized in that** the nth (last) slave unit (2) can transmit a signal to the master unit (1) at its output (2b) via a return line (5) after its nth addressing, as a result of which the master unit (1) detects the completion of the addressing method.

3. The method according to claim 2 or 3, **characterized in that** the signal in the addressing process is forwarded via the address line (4) from the one to the next slave unit (2) using analog signals, bit-coded digital signals, signal pulse sequences, or optical signals.

4. The method according to any one of the preceding claims, **characterized in that** the activation of the dynamic addressing process is performed using a first broadcast command (B) to all slave units (2) by which they are assigned an identical start value address (SA) via the bus line (3a).

5. The method according to any one of the preceding claims, **characterized in that** n slave units (2) are provided, wherein the address output (2b) of the n-1 slave units (2) is connected to the address input of the respective serially adjacent slave unit (2).

6. The method according to any one of the preceding claims, **characterized in that** activation is followed by the dynamic addressing process using the first or using another broadcast command (B) to all slave units (2), wherein address allocation to the 2nd to nth slave units (2) is performed via the address line (4).

7. The method according to any one of the preceding claims, **characterized in that**, after increasing the slave address (Aᵢ) of the ith slave unit (2), a signal at the address output (2b) is conducted to the address input (2a) of the adjacent (i+1)th slave unit (2), and the dynamic addressing process is repeated until n-1 address changes starting from the start value (SA) were performed at the nth slave unit (2).

8. The method according to any one of the preceding claims, **characterized in that** the first slave unit (2) is not connected to the address line (4) but gets its address via a broadcast command (B) via the bus line (3a).

9. The method according to any one of the preceding claims, **characterized in that** the first slave unit (2) is connected via an address line (4) to the master unit (1) to get its address via the address line (4) from the master unit (1).

10. The method according to any one of the preceding claims, **characterized in that** the output of the last slave unit (2) in the serial arrangement is connected to the master unit (1) via a return line (5).

## Revendications

1. Procédé d'adressage dynamique de n unités esclave (2) d'un système maître-esclave (100) comprenant une unité maître (1) et une pluralité d'unités esclave (2), dans lequel les unités esclave (2) sont reliées l'une à l'autre avec l'unité maître (1) par le biais d'un système de bus (3) et peuvent recevoir au moins une instruction de diffusion (B) de l'unité maître (1) par le biais de la ligne de bus (3a) du système de bus (3), dans lequel le système maître-esclave (100) est configuré de sorte que l'unité maître (2) peut envoyer aux unités esclave (2) des instructions de diffusion (B) correspondants d'une part pour l'activation et d'autre part pour la réalisation de l'opération d'adressage dynamique d'adresses esclave (A₁, ..., Aₗ, ..., Aₙ) et dans lequel les unités esclave (2) présentent respectivement une entrée d'adresse (2a) et une sortie d'adresse (2b) et sont reliées l'une à l'autre en série par le biais d'une ligne d'adresse (4) séparée de la ligne de bus (3a)
avec les étapes suivantes :
a. l'activation de l'opération d'adressage dynamique est réalisée au moyen d'une instruction de diffusion (B) à toutes les unités esclave (2) ;
b. une adresse de valeur de départ (SA) identique est affectée à toutes les unités esclave (2) par le biais d'une ligne de bus (3a) ;
c. réalisation de l'opération d'adressage par augmentation de la valeur d'adresse côté entrée de l'adresse esclave (Aᵢ) respective de la i-ème unité esclave (2) de la valeur « 1 » dès que celle-ci reçoit un signal à l'entrée d'adresse (2a) de la (i-1)-ème unité esclave (2) adjacente et sa valeur d'adresse actuelle est adaptée par le fait que la valeur d'adresse est augmentée respectivement de la valeur « 1 » à l'entrée d'adresse (2a)
d. après l'augmentation de l'adresse esclave (Aᵢ) de la i-ème unité esclave (2), respectivement un signal à la sortie d'adresse (2b) vers la (i+1)-ème unité esclave (2) adjacente est amené à son entrée d'adresse (2a) et l'opération d'adressage dynamique est répétée jusqu'à ce que la dernière modification d'adresse aient été effectuées au niveau de la n-ième unité esclave (2), dans lequel l'unité esclave (2) à la n-ième position change n fois sa valeur d'adresse y compris l'adressage de départ.

2. Procédé selon la revendication 2, **caractérisé en ce que** la n-ième (dernière) unité esclave (2) transmet après son n-ième adressage au niveau de sa sortie (2b) par le biais d'une ligne de retour (5) un signal à l'unité maître (1), ce par quoi l'unité maître (1) détecte l'achèvement du procédé d'adressage.

3. Procédé selon la revendication 2 ou 3, **caractérisé en ce que** la transmission de signal lors du processus d'adressage par le biais de la ligne d'adresse (4) de l'une unité esclave (2) à la suivante au moyen de signaux analogiques, de signaux numériques codés en bits, de suites d'impulsions de signal ou au moyen de signaux optiques.

4. Procédé selon l'une quelconque des revendications précédentes, **caractérisé en ce que** l'activation de l'opération d'adressage dynamique a lieu au moyen d'une première instruction de diffusion (B) à toutes les unités esclave (2), par le fait qu'une adresse de valeur de départ (SA) identique leur est affectée par le biais de la ligne de bus (3a).

5. Procédé selon l'une quelconque des revendications précédentes, **caractérisé en ce que** n unités esclave (2) sont prévues, dans lequel la sortie d'adresse (2b) des n-1 unités esclave (2) est reliée à l'entrée d'adresse de la prochaine unité esclave (2) respectivement adjacente en série.

6. Procédé selon l'une quelconque des revendications précédentes, **caractérisé en ce qu'**après l'activation, la réalisation de l'opération d'adressage dynamique a lieu au moyen de la première ou d'une autre instruction de diffusion (B) à toutes les unités esclave (2), dans lequel l'attribution d'adresse des 2 ème à n-ième unités esclave (2) a lieu par le biais de la ligne d'adresse (4).

7. Procédé selon l'une quelconque des revendications précédentes, qu'après l'augmentation de l'adresse esclave (Aᵢ) de la i-ème unité esclave (2) un signal à la sortie d'adresse (2b) vers la (i+1)-ème unité esclave (2) adjacente est amené à son entrée d'adresse (2a) et l'opération d'adressage dynamique est répétée jusqu'à ce que n-1 modifications d'adresse partant de la valeur de départ (SA) aient été effectuées au niveau de la n-ième unité esclave (2).

8. Procédé selon l'une quelconque des revendications précédentes, **caractérisé en ce que** la première unité esclave (2) n'est pas reliée à la ligne d'adresse (4) et reçoit son adresse par le biais de l'instruction de diffusion (B) par le biais de la ligne de bus (3a).

9. Procédé selon l'une quelconque des revendications précédentes, **caractérisé en ce que** la première unité esclave (2) est reliée à l'unité maître (1) par le biais d'une ligne d'adresse (4) afin d'obtenir son adresse de l'unité maître (2) par le biais de la ligne d'adresse (4).

10. Procédé selon l'une quelconque des revendications précédentes, **caractérisé en ce que** la sortie de la dernière unité esclave (2) dans l'agencement en série est reliée à l'unité maître (1) par le biais d'une ligne de retour (5).
